# FASCICULE DE BREVET EUROPEEN

(11) **EP 1 227 943 B1**
(45) Date de publication et mention de la délivrance du brevet: **02.06.2004**
(21) Numéro de dépôt: 00979493.4
(22) Date de dépôt: 12.10.2000
(51) Int. Cl.: B60C 17/06, B60C 17/10

(54) **DISPOSITIF D'OBTURATION D'UN RESERVOIR DE LUBRIFIANT ET METHODE DE LUBRIFICATION DE LA CAVITE INTERNE D'UN PNEUMATIQUE**
VERSCHLUSSVORRICHTUNG EINES SCHMIERMITTELBEHÄLTERS UND VERFAHREN ZUM SCHMIEREN DES INNENRAUMS EINES REIFENS
CLOSURE DEVICE FOR A LUBRICANT RESERVOIR AND METHOD FOR LUBRICATING THE INTERNAL CAVITY OF A TYRE

(30) Priorité: 19.10.1999 FR 9913116
(43) Date de publication de la demande: 07.08.2002
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Pompier, Jean-Pierre, F-63530 Volvic (FR)
(74) Mandataire: Dequire, Philippe Jean-Marie Denis
(86) Numéro de dépôt international: PCT/EP2000/010054
(87) Numéro de publication internationale: WO 2001/028789

(56) Documents cités:
- DE-U- 8 432 017
- FR-A- 2 206 202
- US-A- 4 054 168
- US-A- 4 077 453

## Description

La présente invention concerne un ensemble monté comportant une jante, un appui de sécurité et un pneumatique apte à rouler sur une certaine distance à pression nulle avec la portion interne de la bande de roulement supportée par l'appui de sécurité. L'invention concerne plus particulièrement une méthode de lubrification de la zone d'interface entre la portion interne de la bande de roulement et l'appui.

Les appuis de sécurité pour roue de véhicule utilisant un pneumatique sont bien connus. Le document EP 0 796 747 décrit un exemple d'un tel appui. Celui-ci consiste en un corps circulaire adapté pour montage sur une jante d'un véhicule. L'exemple illustré dans ce document est fait principalement d'un mélange de caoutchouc vulcanisé dont certaines zones sont renforcées, par exemple avec des filaments de type métalliques ou textiles. Bien sûr, d'autres matériaux peuvent être utilisés pour réaliser un tel appui.

De façon générale, les appuis de sécurité sont montés sur une jante, à l'intérieur d'un pneumatique, afin de procurer un appui pour le sommet du pneumatique lors d'un roulage à faible pression, voire à pression nulle, suite à une crevaison par exemple. On évite ainsi le contact direct entre le pneumatique et la jante, qui cause en général une détérioration quasi-instantanée du pneumatique. Les appuis permettent donc d'améliorer la sécurité du véhicule en permettant le roulage pendant un certain temps. Ce temps peut par ailleurs être bénéfique pour trouver un site de dépannage.

Afin de permettre le roulage en condition de pression faible ou nulle, il est très nettement préférable d'assurer une lubrification pour éviter une détérioration prématurée des zones de contact et de frottement, sujettes à des températures relativement élevées. On utilise à cette fin des lubrifiants de types connus, comme par exemple des silicones.

On connaît déjà certains dispositifs permettant de réaliser une telle lubrification. Par exemple, le document FR 2 206 202 décrit un dispositif comportant un réservoir pouvant contenir un lubrifiant. Le réservoir est obturé par un bouchon thermofusible, présentant un point de fusion entre 60°C et 120°C. Lors d'un roulage à plat, l'augmentation de température résultant du frottement provoque la fusion ou tout au moins le ramollissement du bouchon, ce qui permet de libérer l'ouverture. Un tel dispositif comporte certaines limites de fonctionnement. Ainsi, par exemple, il arrive de manière occasionnelle que la température d'un pneumatique augmente, même à pression normale, et se trouve à des niveaux permettant la fusion du bouchon. Le lubrifiant est alors éjecté hors du réservoir, ce qui risque d'occasionner différents types de problèmes, comme par exemple des problèmes de non uniformité, d'épuisement des réserves de lubrifiant, etc.

Le document FR 2 654 040 décrit une roue dans laquelle est prévu un réservoir obturé par un contacteur qui, lorsque la bande de roulement du pneumatique vient se plaquer contre la jante, libère le fluide lubrifiant. Ce dispositif présente l'inconvénient de libérer également du liquide même en cas de contact instantané ou fugitif, par exemple lors d'un choc subit par le pneumatique.

Le document FR 2 654 041 décrit une roue dans laquelle est prévu un réservoir sous forme de soufflet, obturé par un palpeur: lorsque la bande de roulement du pneumatique vient se plaquer contre la jante, il se produit une rupture du palpeur qui permet ensuite de libérer le fluide lubrifiant. Les conditions de rupture du palpeur étant difficile à reproduire de façon répétitive, il en résulte une plage de conditions dans laquelle la rupture peut se produire. Cette plage entraîne une incertitude quant au déclenchement de la lubrification. Par ailleurs, le palpeur n'est oas amovible puisqu'il doit subir une rupture pour libérer le fluide.

Une méthode de lubrification de la cavité du pneumatique selon le préambule de la revendication 1 est décrite dans le document DE 8 432 017 U.

La présente invention vise à pallier ces différents inconvénients, notamment en permettant l'envoi de lubrifiant dans la zone d'interface uniquement lorsque l'ensemble monté est en état de roulage à plat et sans rupture de l'obturateur.

Pour ce faire, selon l'invention, il est prévu, pour un ensemble monté comportant une jante et un appui de sécurité disposé contre la jante, dans la cavité d'un pneumatique, une méthode de lubrification de la cavité du pneumatique selon la revendication 1.

La pose amovible de l'obturateur est avantageusement effectuée au moyen d'une colle thermofusible appliquée entre l'obturateur et une surface d'adhésion située sur le pourtour de l'orifice.

Cette méthode de lubrification permet d'éviter que le réservoir se vide alors que la présence de lubrifiant n'est pas requise. En effet, c'est notamment par l'effet combiné de l'augmentation de température et du frottement mécanique entre le pneumatique affaissé et l'obturateur que l'on permet la libération de l'orifice de lubrification.

Ainsi, si la température augmente au niveau du pneumatique sans que les conditions de roulage à plat soient véritablement présentes, la colle peut éventuellement atteindre son point de ramollissement, mais l'absence de sollicitation mécanique, comme par exemple un effort de cisaillement dû au frottement, fait que l'obturateur demeure en place et continue d'obstruer l'orifice de lubrification. Il n'y a donc pas de fuite accidentelle de lubrifiant dans la cavité du pneumatique.

De manière préférentielle, la colle doit atteindre une température au moins égale ou voisine de 100 degrés Celcius pour permettre la dépose de l'obturateur. De préférence, cette température correspond à celle que l'on retrouve au niveau de l'interface appui/bande de roulement du pneumatique après l'écoulement d'un temps initial de mise en température pendant lequel le roulage à plat se fait sans lubrification ou encore avec une lubrification de base, par exemple pré-appliquée sur la portion interne de la bande de roulement ou sur l'appui. On minimise ainsi les risques de fuite de lubrifiant hors condition de roulage à plat.

D'autres caractéristiques et avantages de l'invention apparaîtront à la lecture de la description qui suit du dispositif de lubrification conforme à l'invention, donnée à titre non limitatif, en se référant au dessin annexé dans lequel :
la figure 1 est une vue en coupe montrant la section d'un appui dans lequel un réservoir est disposé;
la figure 2 est une vue similaire d'un appui servant également de réservoir;
la figure 3 est une vue en coupe illustrant un ensemble monté en mode de roulage à plat, avant que l'obturateur ne libère l'orifice de lubrification.

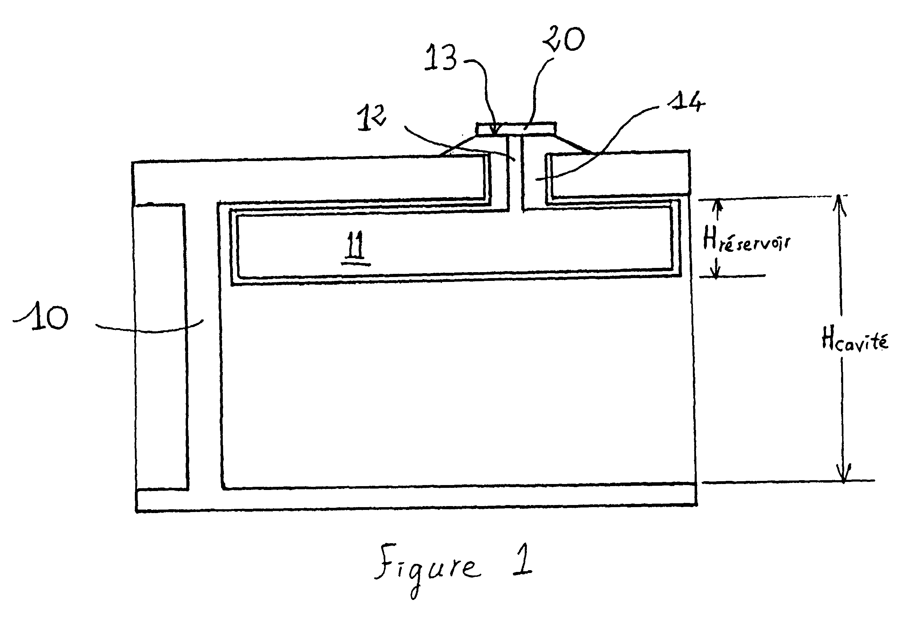

Dans l'exemple de réalisation illustré à la figure 1, un réservoir 11 est disposé dans un appui de sécurité 10 de type connu. Le document EP 0 796 747 décrit un exemple d'un tel appui. Il comporte notamment des cavités ou évidements, principalement prévus pour minimiser le poids et/ou l'échauffement. Un, ou de préférence plusieurs réservoirs 11 sont disposés dans les cavités et répartis circonférentiellement dans l'appui. Le réservoir est avantageusement fabriqué à l'aide d'un matériau pouvant subir certaines déformations. Ainsi, si l'appui est soumis à une charge suffisante pour le déformer, le réservoir se déformera de la même façon sans être altéré. Dans un exemple de réalisation avantageux, le réservoir est en polypropylène. Il résiste ainsi bien aux températures élevées. Le réservoir pourrait également être réalisé avec d'autres matériaux de types plastiques, composites ou même métalliques, comme par exemple en aluminium, ou autre.

Avantageusement, le réservoir a une hauteur "H_{réservoir}" inférieure à la hauteur "H_{cavité}" de la cavité de l'appui. Ainsi, le rapport H_{réservoir} / H_{cavité} peut être inférieur à 0.8, mais est de préférence inférieur à 0.3. Cela permet notamment d'éviter toute fuite accidentelle de lubrifiant lors d'un écrasement temporaire de l'appui, par exemple lors d'un choc.

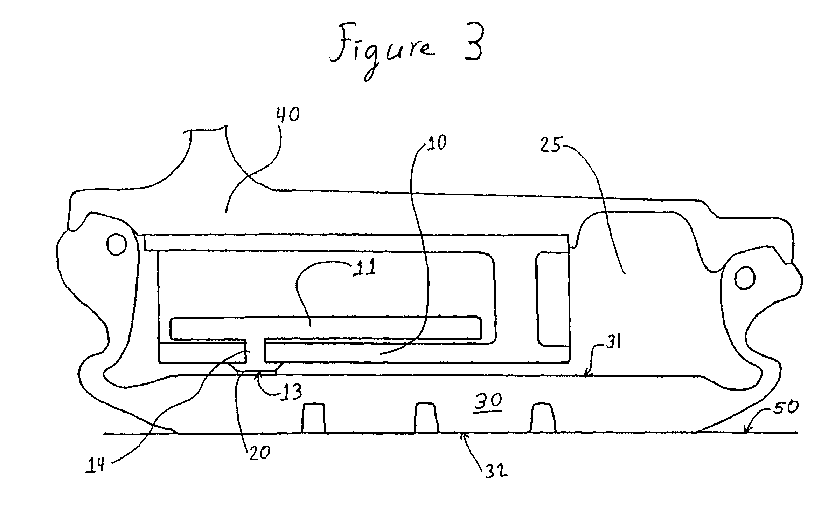

Un orifice 12 permet au réservoir d'être en communication fluidique avec la cavité 25 du pneumatique ou de la roue. De manière préférentielle, l'orifice est disposé de façon à ce que son extrémité libre se trouve dans la zone d'interface entre la portion radialement extérieure de l'appui et la portion interne 31 de la bande de roulement 32 du pneumatique 30 lorsque ce dernier se trouve en condition de roulage à plat. Cette particularité est illustrée à la figure 3. Un tube d'acheminement 14 assure le transport du lubrifiant depuis le réservoir vers la portion externe de l'appui à travers une ouverture d'une paroi de l'appui. Une surface d'adhésion 13 est disposée sur la surface sensiblement adjacente à l'extrémité libre de l'orifice de lubrification. Cette surface s'étend avantageusement autour de l'orifice.

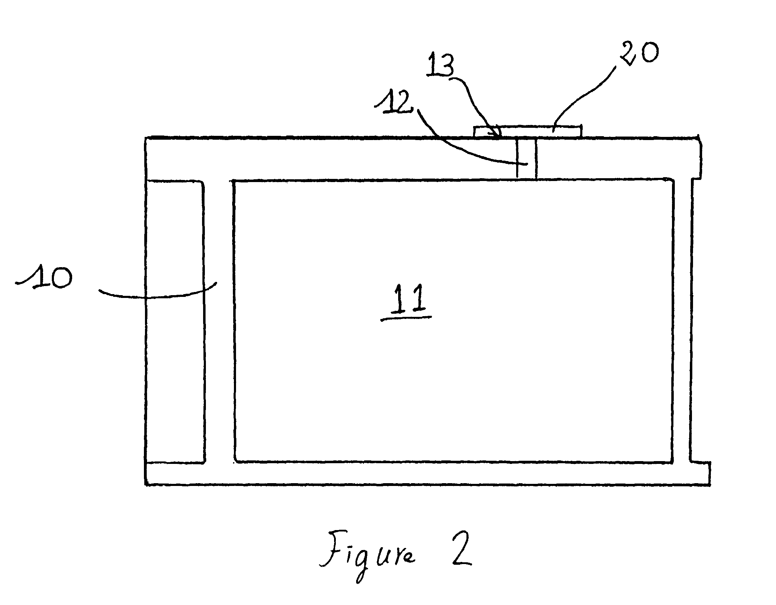

La figure 2 illustre un autre exemple de réalisation dans lequel une cavité interne de l'appui sert de réservoir. L'orifice de lubrification 12 communique directement avec la surface que l'on souhaite lubrifier. La surface d'adhésion 13 est prévue sur la face externe de l'appui, autour de l'orifice.

A partir des exemples décrits, la méthode de lubrification selon l'invention est présentée dans ce qui suit. Dans l'un ou l'autre des exemples décrits, le réservoir 11 est rempli de lubrifiant. Il peut s'avérer avantageux de limiter le niveau de remplissage, par exemple à la moitié de la capacité totale du réservoir. Ainsi, en cas de déformation sensiblement instantanée de l'appui suite à un impact, la présence d'air dans le réservoir permet l'absorption de la déformation du réservoir sans entraîner une augmentation subite du niveau de la pression. Selon une variante d'exécution, le réservoir est prévu avec une hauteur inférieure à celle de la cavité pratiquée dans l'appui. Par hauteur, on entend la distance radiale entre les parois de fond et de dessus du réservoir ou de l'appui. La zone libre entre le dessous du réservoir et l'appui peut servir de zone d'amortissement en cas de choc subit par l'appui. Ainsi, pour de telles variantes, en cas de choc contre l'appui le lubrifiant n'est pas soumis à une augmentation brutale de pression qui serait susceptible de l'expulser subitement hors du réservoir. Selon une variante de réalisation non illustrée, le réservoir est situé radialement près de la paroi de l'appui ayant le rayon le plus court. Un espace libre est alors prévu entre le dessus du réservoir et la paroi de l'appui de plus grand rayon. Cet espace libre sert également d'espace d'amortissement en cas de choc.

Le remplissage du réservoir s'effectue de préférence par l'orifice de lubrification. II serait également possible de prévoir une ouverture spécifique pour le remplissage, par exemple avec un plus grand diamètre afin de faciliter le remplissage. Celle-ci pourrait éventuellement être obturée avec un bouchon de type connu comme par exemple un bouchon vissé ou clipsé. Après le remplissage du réservoir avec une quantité appropriée de lubrifiant, l'orifice de lubrification peut être obturé. A cette fin, un obturateur 20, pouvant avoir la forme par exemple d'une rondelle ou pastille, est collé sur la surface d'adhésion 13. L'obturateur peut être réalisé soit avec un matériau similaire à celui du réservoir, ou encore avec un matériau différent. Ainsi par exemple, l'obturateur pourrait être réalisé en polypropylène, en aluminium, etc.

Pour le collage, on utilise de préférence une colle thermofusible, comme par exemple une colle vendue sous la dénomination SIANOLITE.

On comprend donc que la surface d'adhésion 13 et la face correspondante de l'obturateur sont toutes deux configurées de façon à permettre une fermeture étanche du réservoir. A titre d'exemple, deux surfaces sensiblement planes permettent d'obtenir un collage facile à réaliser et fiable.

L'appui et le réservoir ainsi préparés peuvent être installés sur la jante et le pneumatique peut être monté.

Selon une variante de réalisation, le collage est remplacé par une étape de soudure. L'assemblage réalisé par ladite soudure est prévu pour pouvoir être désassemblé par l'action de la chaleur. La température de désassemblage se situe avantageusement autour de 100 °C ou encore à une température plus élevée.

Lors du roulage, plusieurs situations peuvent se présenter. Tout d'abord, le pneumatique peut devoir surmonter un obstacle important tel une pierre, un nid de poule ou autre. Le franchissement de l'obstacle peut occasionner une déformation importante du pneumatique, telle que la portion interne de la bande de roulement du pneumatique vient en contact avec l'appui 10. Ce contact peut être relativement brutal, selon la taille de l'obstacle et/ou la vitesse du véhicule. Si l'appui est déformé par le choc à une position circonférentielle où se trouve un réservoir, et si le réservoir est moins haut que la cavité, ou encore si le réservoir a une hauteur sensiblement comparable à celle de la cavité de l'appui mais que son remplissage est partiel de façon à laisser une partie "tampon" remplie d'air, soit, dans le premier cas, le réservoir n'est pas touché ou déformé, soit, dans le second cas, l'air en présence dans le réservoir permettra l'absorption du choc et la déformation du réservoir sans pour autant que du lubrifiant soit éjecté par l'orifice de lubrification. Dans une telle situation, l'obturateur 20 reste collé sur la surface d'adhésion 13 et l'étanchéité est normalement maintenue. La force centrifuge que subit le lubrifiant est insuffisante pour que l'obturateur soit déposé.

Dans une seconde situation, il peut se produire une augmentation de température au niveau du pneumatique, soit parce la chaussée est très chaude, soit à cause d'une conduite très sportive avec beaucoup de sollicitations au niveau du pneumatique, etc, sans pour autant que le pression du pneumatique diminue. Cette augmentation de température peut éventuellement causer un ramollissement de la colle de l'obturateur. En l'absence de forces de frottement entre la portion interne 31 de la bande de roulement et l'obturateur 20, ce dernier reste en place. En effet, le seul ramollissement de la colle ne suffit pas à retirer l'obturateur. Il faut en plus une sollicitation mécanique. D'autre part, la force centrifuge subie par le lubrifiant est insuffisante pour libérer l'orifice; la force d'adhésion résiduelle de la colle est supérieure à la force exercée par le lubrifiant.

Cela est d'autant plus véridique que le diamètre, ou surface, de l'orifice est petit par rapport au diamètre ou à la surface effective de l'obturateur, afin de laisser une plus grande surface disponible pour la surface d'adhésion. Dans un exemple de réalisation avantageux, le diamètre de l'obturateur est de 10 mm et celui de l'orifice est de 2 mm. Ainsi, de manière avantageuse, le rapport entre la surface de l'orifice et la surface d'adhésion est inférieur à 0.8 et de préférence inférieur à 0.5.

Enfin, également lors du roulage, le pneumatique peut subir une perte de pression telle que la portion interne 31 de la bande de roulement vient en contact avec l'appui 10. La zone écrasée du pneumatique 30 est alors sensiblement constamment en contact contre l'appui. Si le roulage persiste, il se produit rapidement un échauffement des portions en contact. L'échauffement est principalement dû au fait que les éléments en contact, soit la portion interne de la bande de roulement et la surface radialement externe de l'appui, sont de diamètres différents. L'échauffement produit entraîne une augmentation de la température de la colle de l'obturateur. Lorsque la colle atteint son point de fusion, les forces de frottement en présence entre la portion interne de la bande de roulement et l'appui suffisent généralement pour entraîner la dépose de l'obturateur, soit en le décollant complètement, ou tout au moins partiellement, par exemple en le déplaçant à côté de l'orifice de lubrification. L'orifice ainsi libéré permet au lubrifiant, soumis à la force centrifuge inhérente à la rotation de la roue, de sortir du réservoir et de lubrifier la zone d'interface et/ou le reste de la cavité du pneumatique. Des essais ont démontré, pour une configuration donnée, qu'une distance de roulage à plat de l'ordre de 3 km suffit à déclencher la lubrification. Selon les dimensions et les agencements du dispositif, les conditions de roulage, etc, cette distance pourrait bien sûr varier.

Afin de favoriser la dépose de l'obturateur par les forces de frottement lors de l'affaissement de la bande de roulement, l'épaisseur de l'obturateur est de préférence supérieure à 0.2 mm.

La lubrification de la cavité de la roue et plus Particulièrement de la zone d'interface entre l'appui et la portion interne de la bande de roulement permet de limiter le frottement entre les deux éléments en contacts, de limiter l'augmentation de température et enfin de retarder la détérioration du pneumatique. L'utilisation de pneumatiques de type connu permettant le roulage à plat sur une certaine distance, avec une lubrification selon la méthode et/ou un dispositif selon l'invention, permettent de poursuivre le roulage en condition de pression très faible ou nulle, pour une distance donnée.

## Revendications

1. Méthode de lubrification de la cavité (25) du pneumatique (30) et plus particulièrement de la zone d'interface entre l'appui (10) et le pneu, pour un ensemble monté comportant une jante et un appui de sécurité (10) disposé contre la jante dans la cavité (25) d'un pneumatique, ledit ensemble comprenant également un réservoir (11) de lubrifiant en communication fluidique avec ladite zone d'interface par un orifice (12) de lubrification susceptible d'être obturé par un obturateur (20), ledit ensemble étant susceptible de se trouver soit dans un état de roulage sous pression, état dans lequel la pression dans la cavité (25) correspond au moins à une valeur susceptible d'éviter tout contact non fugitif de la portion interne de la bande de roulement du pneumatique contre l'appui de sécurité, soit dans un état de roulage à plat, état dans lequel la pression dans la cavité (25) correspond à une valeur telle que la portion interne de la bande de roulement du pneumatique est en contact sensiblement prolongé contre l'appui de sécurité, ladite méthode permettant l'envoi de lubrifiant dans ladite zone uniquement lorsque l'ensemble monté est en état de roulage à plat,
ladite méthode consistant à:
- prévoir une quantité de lubrifiant dans ledit réservoir (11);
- poser de manière amovible un obturateur (20) contre l'orifice (12) de lubrification de façon à ce que lorsque l'ensemble monté est en état de roulage sous pression, l'ouverture demeure obstruée et le lubrifiant demeure dans le réservoir; ladite méthode étant **caractérisée en ce que** lorsque l'ensemble monté est en état de roulage à plat, le contact non fugitif établi entre la surface interne de la bande de roulement et l'obturateur permet la dépose de l'obturateur (20), dans la mesure où se réalise une condition sensiblement simultanée d'une part d'augmentation de la température dans la cavité (25) du pneumatique et d'autre part de contact mécanique entre l'obturateur (20) et une portion interne du pneumatique pendant une durée minimale prédéterminée.

2. Méthode de lubrification de la cavité interne d'un pneumatique pour ensemble monté selon la revendication 1, dans laquelle la pose amovible de l'obturateur (20) est effectuée au moyen d'une colle thermofusible appliquée entre l'obturateur (20) et une surface d'adhésion (13) située sur le pourtour de l'orifice.

3. Méthode de lubrification de la cavité interne d'un pneumatique pour ensemble monté selon la revendication 2, dans laquelle la colle doit atteindre une température sensiblement égale ou supérieure à 100°C pour permettre la dépose de l'obturateur (20).

## Patentansprüche

1. Verfahren zum Schmieren des Hohlraums (25) eines Luftreifens (30), und genauer der Grenzfläche zwischen dem Lager (10) und dem Luftreifen, für einen montierten Bausatz, der eine Felge und ein Sicherheitslager (10) aufweist, das gegen die Felge im Hohlraum (25) eines Luftreifens angeordnet ist, wobei der Bausatz auch einen Schmiermittelbehälter (11) aufweist, der über eine durch eine Verschlussvorrichtung (20) verschließbare Schmiermittelöffnung (12) mit der Grenzfläche in Flüssigkeitsverbindung steht, wobei der Bausatz sich entweder in einem Zustand des Fahrens unter Druck, in dem der Druck im Hohlraum (25) mindestens einem Wert entspricht, der jeden nichtflüchtigen Kontakt des inneren Abschnitts der Lauffläche des Luftreifens mit dem Sicherheitslager (10) vermeiden kann, oder in einem Zustand des drucklosen Fahrens befinden kann, in dem der Druck im Hohlraum (25) einem solchen Wert entspricht, dass der innere Abschnitt der Lauffläche des Luftreifens wesentlich länger mit dem Sicherheitslager in Kontakt steht, wobei das Verfahren nur dann das Liefern von Schmiermittel in diesen Bereich erlaubt, wenn der montierte Bausatz sich im Zustand des drucklosen Fahrens befindet,
wobei das Verfahren darin besteht,
- eine Schmiermittelmenge im Behälter (11) vorzusehen,
- eine Verschlussvorrichtung (20) derart lösbar auf die Schmiermittelöffnung (12) aufzubringen, dass, wenn der montierte Bausatz sich im Zustand des Fahrens unter Druck befindet, die Öffnung verschlossen und das Schmiermittel im Behälter bleibt,
**dadurch gekennzeichnet, dass**, wenn der montierte Bausatz im Zustand des drucklosen Fahrens ist, der hergestellte nichtflüchtige Kontakt zwischen der Innenfläche der Lauffläche und der Verschlussvorrichtung dann das Abnehmen der Verschlussvorrichtung (20) ermöglicht, wenn ein im wesentlichen gleichzeitiger Zustand einerseits einer Erhöhung der Temperatur im Hohlraum (25) des Luftreifens und andererseits eines mechanischen Kontakts zwischen der Verschlussvorrichtung (20) und einem inneren Abschnitt des Luftreifens während einer vorbestimmten Mindestdauer auftritt.

2. Verfahren zum Schmieren des inneren Hohlraums eines Luftreifens für einen montierten Bausatz gemäß Anspruch 1, bei dem das lösbare Aufbringen der Verschlussvorrichtung (20) mittels eines wärmeschmelzbaren Klebers erfolgt, der zwischen der Verschlussvorrichtung (20) und einer Haftfläche (13) aufgebracht wird, die sich auf dem Umfang der Öffnung befindet.

3. Verfahren zum Schmieren des inneren Hohlraums eines Luftreifens für einen montierten Bausatz gemäß Anspruch 2, bei dem der Kleber eine Temperatur von im wesentlichen mindestens 100 °C erreichen muss, um das Abnehmen der Verschlussvorrichtung (20) zu ermöglichen.

## Claims

1. Method of lubricating the cavity (25) of the tire (30) and more particularly an interface zone between the support (10) and the tire for a fitted assembly comprising a wheel rim and a safety support (10) arranged against a rim inside a cavity (25) of a tire, said assembly also comprising a reservoir (11) of lubricant in fluid communication with said interface zone via a lubrication port (12) closable by a removable seal (20), said assembly being able either to be in a condition of rolling with the tire inflated, a condition in which the pressure inside the cavity (25) is at least sufficient to prevent any other than momentary contact between the inside of the tire tread and the safety support, or to be in a condition of flat rolling, a condition in which the pressure inside the cavity (25) is such that the inside of the tire tread is in substantially prolonged contact with the safety support, said method allowing lubricant to be dispensed in said zone only when the fitted assembly is in the flat rolling condition, said method consisting in:
- providing a quantity of lubricant in said reservoir (11);
- placing said removable seal (20) against said lubrication port (20), such that when the fitted assembly is rolling while the tire is inflated, the port remains closed and the lubricant remains in the reservoir; said method being **characterized in that** when the fitted assembly is in the flat rolling condition, a non-transient contact established between the inside surface of the tread and the seal enables the removal of the seal (20), only when a substantially simultaneous condition on the one hand of a temperature increase in the tire cavity (25) and on the other hand of mechanical contact between the seal (20) and an inside portion of the tire during a predetermined minimum time is provided.

2. Method of lubricating the cavity of the tire for a fitted assembly according to claim 1, in which said seal (20) is removably held in place by a thermally meltable adhesive applied between said seal (20) and an adhesion surface (13) located around said port.

3. Method of lubricating the cavity of the tire for a fitted assembly according to claim 2, wherein said adhesive must reach a temperature substantially equal to or higher than 100°C to allow the removal of the seal (20).
